# EUROPÄISCHE PATENTANMELDUNG

(11) **EP 2 650 707 A1**
(43) Veröffentlichungstag der Anmeldung: **16.10.2013**
(21) Anmeldenummer: 12163964.5
(22) Anmeldetag: 12.04.2012
(51) Int. Cl.: G02B 6/00

(54) **Leuchtmittel und Kraftfahrzeugleuchte**

(71) Anmelder: odelo GmbH, 71409 Schwaikheim (DE)
(72) Erfinder: Kunze, Jochen, 47441 Moers (DE); Manth, Thomas, 52076 Aachen (DE)
(74) Vertreter: Benninger, Johannes

(57) **Zusammenfassung**

Es werden ein Leuchtmittel (01) und eine Kraftfahrzeugleuchte mit einem solchen Leuchtmittel (01) beschrieben. Das Leuchtmittel (01) umfasst wenigstens einen Lichtleiter (02) und jeweils wenigstens einer an jedem der gegenüberliegenden Enden (05, 06) des Lichtleiters (02) angeordneten Lichtquelle (03, 04). Das Leuchtmittel zeichnet sich durch ein doppelseitig reflektierendes Element (07) zwischen den beiden Enden (05, 06) aus, welches den Lichtleiter (02) in zwei lichttechnisch voneinander unabhängige Partien (08, 09) unterteilt, welche Partien (08, 09) frei von einer Überkopplung von von einer Lichtquelle (03, 04) in die eine Partie (08, 09) eingekoppelten Lichts in die andere Partie (09, 08) sind. Die Kraftfahrzeugleuchte weist in ihrem von einem Leuchtengehäuse und einer Lichtscheibe umschlossenen Leuchteninnenraum mindestens ein Leuchtmittel (01) mit mindestens zwei Lichtquellen (03, 04) zur Erfüllung mindestens zweier unterschiedlicher Lichtfunktionen (a), b), c), d)) der Kraftfahrzeugleuchte sowie mindestens einen Lichtleiter (02) mit beidseitiger Lichteinkopplung an zwei gegenüberliegenden Enden (05, 06) auf. Ein doppelseitig reflektierendes Element (07) zwischen den beiden Enden (05, 06) des Lichtleiters unterteilt diesen in zwei lichttechnisch voneinander unabhängige Partien (08, 09). Die zur Lichteinkopplung an verschiedenen Enden (05, 06) des Lichtleiters (02) vorgesehenen Lichtquellen (03, 04) sind zur Erfüllung zumindest zweier unterschiedlicher Lichtfunktionen (a), b), c), d)) der Kraftfahrzeugleuchte vorgesehen.

## Beschreibung

Die Erfindung betrifft ein Leuchtmittel gemäß dem Oberbegriff des Anspruchs 1 sowie eine mit mindestens einem solchen Leuchtmittel ausgestattete Kraftfahrzeugleuchte gemäß dem Oberbegriff des Anspruchs 2.

Eine Kraftfahrzeugleuchte umfasst im Wesentlichen einen von einem Leuchtengehäuse und einer Lichtscheibe umschlossenen Leuchteninnenraum und mindestens ein darin beherbergtes Leuchtmittel für wenigstens eine Lichtfunktion der Kraftfahrzeugleuchte. In dem Leuchteninnenraum kann mindestens ein hinter wenigstens einer Lichtquelle des zumindest einen Leuchtmittels angeordneter Reflektor untergebracht sein. Der Reflektor kann zumindest zum Teil durch ein separates Bauteil und/oder durch wenigstens einen Teil des Leuchtengehäuse selbst, beispielsweise vermittels einer zumindest teilweisen reflektierenden Beschichtung, gebildet sein.

Wenigstens einer Lichtquelle des Leuchtmittels können ein oder mehrere Optikelemente, wie etwa mindestens eine Linse, mindestens ein Rinnenkonzentrator, z.B. mindestens eine Parabolrinne (CPC; Compound Parabolic Concentrator) oder dergleichen zur Ausformung einer definierten Abstrahlcharakteristik zugeordnet sein.

Die Lichtscheibe ist durch eine transparente Abdeckung gebildet, welche den Leuchteninnenraum sowie die von diesem beherbergten Bauteile gegen Witterungseinflüsse schützt.

In dem Leuchteninnenraum kann im Strahlengang zwischen wenigstens einer Lichtquelle des Leuchtmittels und der Lichtscheibe wenigstens eine Optikscheibe angeordnet sein, welche beispielsweise eine bestimmte Struktur und/oder Maskierung aufweisen kann, etwa um bei einer klaren, beispielsweise für einen Betrachter eine Tiefenwirkung bewirkenden Lichtscheibe das Leuchtmittel und/oder dessen mindestens eine Lichtquelle zu kaschieren. Das Leuchtengehäuse bzw. der Leuchteninnenraum kann in mehrere Leuchtenkammern mit jeweils eigenen Lichtquellen und/oder Leuchtmitteln, eventuell Reflektoren und/oder Optikelementen und/oder Optikscheiben, sowie gegebenenfalls Lichtscheiben unterteilt sein, von denen mehrere oder alle Leuchtenkammern gleiche oder jede Leuchtenkammer eine andere Lichtfunktionen erfüllen kann.

Bei einer Lichtfunktion handelt es sich dabei um eine durch Abstrahlung von Licht einer bestimmten Farbe in einer bestimmten Helligkeit und Richtung verwirklichte, zur Erfüllung einer Aufgabe vorgesehene Funktion der Kraftfahrzeugleuchte. Jede Kraftfahrzeugleuchte erfüllt je nach Ausgestaltung eine oder mehrere Aufgaben bzw. Funktionen. Zur Erfüllung jeder Aufgabe bzw. Funktion ist eine Lichtfunktion der Kraftfahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer auch als Schlusslichtfunktion bezeichneten Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Ein Leuchtmittel für wenigstens eine Lichtfunktion umfasst zumindest wenigstens eine Lichtquelle, beispielsweise mindestens eine Glühlampe oder mindestens eine Gasentladungslampe oder mindestens eine Leuchtdiode sowie gegebenenfalls Kombinationen hiervon.

Beispielsweise kommen als Lichtquellen von Leuchtmitteln für Kraftfahrzeugleuchten unter anderem wegen ihres geringen Stromverbrauchs vermehrt Leuchtdioden zum Einsatz. Diese bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln Kraftfahrzeugleuchten verwirklicht werden, die an fast jede nur erdenkliche Einbausituation angepasst sein können.

Eine typische Anpassung an die Einbausituation betrifft die äußere Gestalt der Kraftfahrzeugleuchte. Diese äußere Gestalt der Kraftfahrzeugleuchte ist beispielsweise durch die gestalterische Formgebung eines Kraftfahrzeugs sowie durch die vorgesehene Kontur der Kraftfahrzeugleuchte vorgegeben und spiegelt sich im so genannten Strakverlauf der Kraftfahrzeugleuchte wider.

Eine weitere typische Anpassung einer Kraftfahrzeugleuchte an die Einbausituation betrifft den zur Verfügung stehenden Bauraum. Dabei wird ein möglichst geringer Bauraumbedarf angestrebt, beispielsweise um bei einer Ausgestaltung einer Kraftfahrzeugleuchte als Heckleuchte mehr Platz für den Kofferraum eines Kraftfahrzeugs zur Verfügung zu haben und um gleichzeitig Material und Gewicht zu sparen, wodurch beispielsweise Energieeinsparungen, wie etwa Verbrauchseinsparungen von Treibstoff oder einer geringeren Belastung eines Stromspeichers einhergehend mit einer Verringerung der Umweltbelastung sowohl bei der Herstellung, als auch im Betrieb des Kraftfahrzeugs erreicht werden können.

Neben der Anpassung an die Einbausituation müssen Kraftfahrzeugleuchten sehr hohe Qualitätsanforderungen erfüllen. So werden beispielsweise bereits geringe Abweichungen von einem homogenen Eindruck des Erscheinungsbilds sowohl im ausgeschalteten Zustand des Leuchtmittels, dem so genannten Kaltzustand, wie beispielsweise ein dunkel erscheinendes Lampenloch, als auch im so genannten Warmzustand bei eingeschaltetem Leuchtmittel, wie beispielsweise hinsichtlich der Ausleuchtung einer Leuchtenkammer und/oder eines Reflektors, und/oder ein möglicherweise blendender direkter Blick des Betrachters auf die Lichtquelle eines Leuchtmittels, als qualitätsmindernd angesehen.

Um den hohen Qualitätsanforderungen an Kraftfahrzeugleuchten gerecht zu werden, ist es deshalb ein Ziel bei der Entwicklung von Kraftfahrzeugleuchten, die Lichtquellen einer oder mehrerer Lichtfunktionen einer Kraftfahrzeugleuchte vor dem direkten Blick eines Betrachters zu verbergen.

Um eine oder mehrere, ihr Licht in einen oder mehrere Reflektoren strahlende Lichtquellen eines Leuchtmittels dem Blick des Betrachters zu entziehen, welches Licht mittels Reflexion an entsprechenden Formen bzw. Reflektorstrukturen auf dem Reflektor, wie etwa Kissen, Walzen, etc., in die gewünschte Richtung gelenkt wird, ist bekannt, die Lichtquelle beispielsweise oberhalb oder unterhalb des Reflektors oder neben diesem anzuordnen und das von ihr abgestrahlte Licht seitlich in einen Reflektor einzustrahlen. Hierdurch ist die Lichtquelle für den Betrachter beim direkten Blick aus normaler Richtung, wie dies der Sicht eines anderen Verkehrsteilnehmers bei in ein Kraftfahrzeug eingebautem Zustand entspricht, auf die Kraftfahrzeugleuchte nicht erkennbar. Diese wird erst sichtbar, sobald der Betrachter von oben oder unten her in die Kraftfahrzeugleuchte blickt. Da dies tatsächlich eher selten vorkommt, können Lichtquellen auf diese Art gut verborgen werden und der Reflektor weitestgehend lampenlochfrei gehalten werden.

Aufgrund der meist starken Strakverläufe ist es jedoch nicht immer möglich die Lichtquellen in einer lichttechnisch günstigen Lage, wie etwa direkt abstrahlend oder von oben oder unten her in den Reflektor einstrahlend einzubinden. Zum anderen kann hierdurch unabhängig vom Strakverlauf nicht vollständig sichergestellt werden, dass dadurch ein direkter Blick auf die Lichtquelle von außen durch die Lichtscheibe hindurch vollständig verwehrt ist.

So kommt es insbesondere bei starken Strakverläufen vor, dass die Lichtquellen bei der Betrachtung von außerhalb der Kraftfahrzeugleuchte durch die Lichtscheibe hindurch teilweise sichtbar sind. Eine zumindest aus einigen Blickwinkeln von außerhalb der Kraftfahrzeugleuchte durch die Lichtscheibe hindurch sichtbare Lichtquelle eines zur Erfüllung einer Lichtfunktion vorgesehenen Leuchtmittels wird als störend und den Qualitätseindruck nachhaltig negativ beeinflussend empfundenen.

Ein vollständiges Verbergen der Lichtquellen ist erst z. B. mittels auch als Lichtleiter bezeichneter, totalreflektierender (TIR; Total Internal Reflection), lichtleitender Elemente mit einem Lichteinkoppelbereich und einem Lichtauskoppelbereich möglich, die das in sie am Lichteinkoppelbereich eingekoppelte Licht von einer verborgen angeordneten Lichtquelle in Richtung Auskoppelbereich leiten und dort wieder auskoppeln. Das ausgekoppelte Licht kann dabei direkt, ohne einen Reflektor in der gewünschten Richtung abgestrahlt werden, oder indirekt, indem es in einen Reflektor eingestrahlt wird, der es dann in die gewünschte Richtung reflektiert.

Bei einer Kraftfahrzeugleuchte können ein oder mehrere Lichtleiter vorgesehen sein, beispielsweise um eine gewünschte Lichtverteilung z.B. über die Lichtscheibe hinweg des von einer oder mehreren Lichtquellen ausgestrahlten Lichts zu erhalten.

Ein Lichtleiter, in den Licht mindestens einer Lichtquelle an mindestens einer Lichteinkoppelfläche wenigstens eines Lichteinkoppelbereichs ein- und an mindestens einer von der Lichteinkoppelfläche verschiedenen Lichtauskoppelfläche zumindest eines Lichtauskoppelbereichs wieder ausgekoppelt wird, kann dabei als ein separates Bauteil im Leuchteninnenraum beherbergt oder Teil eines Leuchtmittels sein.

Beispielsweise kann ein Leuchtmittel einen oder mehrere Lichtleiter sowie eine oder mehrere, das von ihnen ausgestrahlte Licht zumindest zum Teil in den wenigstens einen Lichtleiter einkoppelnde Lichtquellen umfassen.

Der Lichtleiter kann beispielsweise stabförmig als so genannter Stablichtleiter und/oder flächig als so genannter Flächenlichtleiter ausgebildet sein, mit einer auf seiner beispielsweise normal zur Hauptabstrahlrichtung einer Kraftfahrzeugleuchte orientierten Vorderseite angeordneten Lichtauskoppelfläche.

Nachteilig an Lichtleitern sind deren hohe Entwicklungs- und Herstellungskosten, einhergehend mit einem hohen Fertigungsaufwand.

Dies steht der generellen Forderung nach kostengünstiger Herstellung von Bauteilen und Montage von Komponenten aus mehreren Bauteilen im Automobilbereich entgegen.

Zusätzlich verschärft werden diese in Bezug auf Lichtleiter entgegenstehenden Forderungen durch den Umstand, dass ein Lichtleiter in einer Kraftfahrzeugleuchte nur dann genutzt wird, wenn die zur Verwirklichtung durch ihn vorgesehene Lichtfunktion aufgerufen wird.

Durch DE 198 04 440 A1 ist bekannt, die Lichtauskoppelstrukturen auf einer der Lichtauskoppelfläche gegenüberliegenden Lichtumlenkfläche derart zu verändern, dass möglichst viel Licht gleichmäßig über die Länge des Lichtleiters verteilt aus diesem austritt. Auch kann eine beidseitige Einkopplung vorgesehen sein, bei der die Lichtauskoppelstruktur genau in der Mitte zwischen den beiden Lichteinkoppelflächen die größten Abmessungen aufweist.

Durch DE 10 2008 016 675 A1 ist bekannt, das einer Lichteinkoppelfläche gegenüberliegende Ende eines Lichtleiters zu verspiegeln.

Eine Aufgabe der Erfindung ist die Weiterentwicklung eines Leuchtmittels mit einem Lichtleiter, welches den generellen Forderungen an Kraftfahrzeugteile und Kraftfahrzeugkomponenten bezüglich Kostensenkung bei Herstellung und Montage unter Einbeziehung von Lichtleitern bei der Verwirklichung von Lichtfunktionen gerecht wird und einen geringen Bauraumbedarf bei gleichzeitig hohem Qualitätseindruck aufweist, sowie ferner eine Kraftfahrzeugleuchte zu entwickeln, welche besser an jede erdenkliche Einbausituation angepasst werden kann und dabei besonders hohen Qualitätsanforderungen gerecht wird und darüber hinaus kostengünstig hergestellt werden kann.

Die Aufgabe wird gelöst mit den Merkmalen der unabhängigen Ansprüche.

Die Erfindung sieht demnach zur Lösung der Aufgabe unter gleichzeitiger Behebung der genannten Nachteile des Standes der Technik ein beispielsweise zum Einbau in eine Kraftfahrzeugleuchte geeignetes Leuchtmittel mit wenigstens einem Lichtleiter mit beidseitiger Lichteinkopplung vermittels jeweils mindestens einer Lichtquelle und eine mit zumindest einem solchen Leuchtmittel ausgestattete Kraftfahrzeugleuchte vor. Mindestens eine Lichtquelle ist dabei zur Lichteinkopplung an jedem der gegenüberliegenden Enden des Lichtleiters vorgesehen.

Das Leuchtmittel ist zur Verwendung für jede Art Leuchte geeignet, welche zur Erfüllung zumindest zweier Lichtfunktionen gleicher und/oder unterschiedlicher Lichtfarbe zeitgleich und/oder zeitversetzt vorgesehen ist. Beispiele sind neben Kraftfahrzeugleuchten Verkehrsampeln, beispielsweise zweifarbige Fußgängerampeln oder Ampeln an Bahnübergängen etc., Leuchten mit veränderlicher Lichtfarbe, beispielsweise für Therapiezwecke, Veranstaltungen und Aufführungen oder Straßenbeleuchtungen, um nur einige denkbare Anwendungen zu nennen.

Der Lichtleiter umfasst an jedem seiner beiden gegenüberliegenden Enden wenigstens einen zur Einkopplung von Licht mindestens einer Lichtquelle vorgesehenen Lichteinkoppelbereich mit mindestens einer Lichteinkoppelfläche. Zwischen den beiden Enden befindet sich zumindest ein zur Auskopplung des eingekoppelten Lichts vorgesehener Lichtauskoppelbereich mit mindestens einer von der Lichteinkoppelfläche verschiedenen Lichtauskoppelfläche.

Um einen effizienten Lichtleiter zeitgleich und zeitversetzt für verschiedene Lichtfunktionen vorzusehen, ohne dass diese oder deren Lichtfarben durchmischt werden, sieht die Erfindung vor, ein doppelseitig reflektierendes Element zwischen den beiden Enden innerhalb des einstückig ausgeführten Lichtleiters anzuordnen. Das doppelseitig reflektierende Element unterteilt die Lichtauskoppelfläche des Lichtauskoppelbereichs und damit den einteilig hergestellten Lichtleiter in zwei lichttechnisch voneinander unabhängige Partien. Die beiden Partien sind frei von einer Überkopplung des von einer Lichtquelle in die eine Partie des Lichtleiters eingekoppelten Lichts in die andere Partie des Lichtleiters. Die Partien können in Abhängigkeit von der Lichteinkopplung an den beiden Enden des Lichtleiters beide dieselbe Lichtfunktion, oder unterschiedliche Lichtfunktionen erfüllen. Die beiden Partien sind dabei optisch voneinander getrennt, wobei am einen Ende eingekoppeltes Licht nicht über das doppelseitig reflektierende Element hinweg propagieren kann.

Vorteile ergeben sich durch weniger für das Leuchtmittel zur Erfüllung mehrerer Lichtfunktionen zu verbauende Bauteile durch die Einsparung wenigstens eines Lichtleiters, einhergehend mit einem verringerten Montageaufwand, verringerter Lagerhaltung, sowie einer Verringerung möglicher Montagefehler und damit verringerten Ausschusses.

Beispielsweise kann der Lichtleiter zeitgleich und zeitversetzt für Lichtfunktionen verschiedener Lichtfarben vorgesehen sein, ohne die Lichtfarben zu durchmischen. Hierzu können Lichtquellen unterschiedlicher Lichtfarbe zur Lichteinkopplung an den beiden Enden des Lichtleiters vorgesehen sein. Das doppelseitig reflektierende Element innerhalb des Lichtleiters trennt bei einer doppelseitigen Einspeisung an beiden Enden des Lichtleiters mit unterschiedlicher Wellenlänge die beiden für die durch die unterschiedlichen Wellenlängen gegebenen verschiedenen Lichtfarben vorgesehenen Partien des Lichtleiters.

Vorzugsweise sind an mindestens einem Ende des Lichtleiters wenigstens zwei getrennt ansteuerbare Lichtquellen unterschiedlicher Lichtfarbe vorgesehen. Hierdurch kann in den Lichtleiter zumindest von einem Ende her Licht wahlweise einer ersten Lichtfarbe oder einer zweiten Lichtfarbe sowie, falls eine entsprechende Lichtfarbe verwendet werden soll, durch Betätigung beider Lichtquellen der ersten und der zweiten Lichtfarbe, eine dritte Lichtfarbe eingekoppelt werden.

Wenigstens zwei Lichtquellen unterschiedlicher Lichtfarbe können durch eine Lichtquelle verwirklicht sein, welche in der Lage ist, gezielt Licht unterschiedlicher Wellenlänge abzustrahlen. Bekannte derartige Lichtquellen sind Leuchtdioden mit beispielsweise zwei getrennt ansteuerbaren LED-Chips, einem beispielsweise für gelbes Licht, der andere für rotes Licht.

Bei der Verwendung verschiedenfarbiger Lichtquellen können vermittels ein und des selben Lichtleiters mehrere Lichtfunktionen gleichzeitig und auch zeitversetzt unter Nutzung des gesamten Lichtleiters verwirklicht werden.

Denkbar ist die Verwirklichtung folgender Lichtfunktionen zeitgleich und/oder zeitversetzt vermittels nur eines Leuchtmittels mit vorzugsweise nur einem Lichtleiter am Beispiel der Lichtfunktionen Rücklichtfunktion (rot, normal hell, im Nachfolgenden zur einfachen Unterscheidung dunkel, rot bezeichnet), Bremslichtfunktion (rot, hell), Wiederholblinklichtfunktion (gelb), Rückfahrlichtfunktion (weiß) einer Kraftfahrzeugleuchte:
- Rücklichtfunktion: dunkle, rote Lichteinkopplung an beiden Enden des Lichtleiters.
- Bremslichtfunktion: helle, rote Lichteinkopplung an beiden Enden des Lichtleiters.
- Wiederholblinklichtfunktion: zeitweilig gelbe Lichteinkopplung an beiden Enden des Lichtleiters.
- Rückfahrlichtfunktion: weiße Lichteinkopplung an beiden Enden des Lichtleiters.
- Rücklichtfunktion und Bremslichtfunktion: dunkle, rote Lichteinkopplung an einem Ende des Lichtleiters und helle, rote Lichteinkopplung am verbleibenden, gegenüberliegenden Ende des Lichtleiters.
- Rücklichtfunktion und Wiederholblinklichtfunktion: dunkle, rote Lichteinkopplung an einem Ende des Lichtleiters und zeitweilig gelbe Lichteinkopplung sowie zwischen der zeitweilig gelben Lichteinkopplung dunkle, rote Lichteinkopplung am verbleibenden, gegenüberliegenden Ende des Lichtleiters.
- Bremslichtfunktion und Wiederholblinklichtfunktion: helle, rote Lichteinkopplung an einem Ende des Lichtleiters und zeitweilig gelbe Lichteinkopplung sowie zwischen der zeitweilig gelben Lichteinkopplung helle, rote Lichteinkopplung am verbleibenden Ende des Lichtleiters.
- Rücklichtfunktion und Rückfahrlichtfunktion: dunkle, rote Lichteinkopplung an einem Ende des Lichtleiters und weiße Lichteinkopplung am verbleibenden, gegenüberliegenden Ende des Lichtleiters.
- Bremslichtfunktion und Rückfahrlichtfunktion: helle, rote Lichteinkopplung an einem Ende des Lichtleiters und weiße Lichteinkopplung am verbleibenden, gegenüberliegenden Ende des Lichtleiters.
- Rückfahrlichtfunktion und Wiederholblinklichtfunktion: weiße Lichteinkopplung an einem Ende des Lichtleiters und zeitweilig gelbe Lichteinkopplung sowie zwischen der zeitweilig gelben Lichteinkopplung weiße Lichteinkopplung am verbleibenden, gegenüberliegenden Ende des Lichtleiters.
- Bremslichtfunktion und Wiederholblinklichtfunktion und Rücklichtfunktion: helle, rote Lichteinkopplung an einem Ende des Lichtleiters und zeitweilig gelbe Lichteinkopplung sowie zwischen der zeitweilig gelben Lichteinkopplung dunkle, rote Lichteinkopplung am verbleibenden Ende des Lichtleiters.
- etc.

Wichtig ist hervorzuheben, dass die Aufzählung nicht als abschließend zu verstehen ist. So kann beispielsweise grundsätzlich auch eine Nebelschlussleuchtfunktion verwirklicht werden, in Kombination mit den zuvor genannten Lichtfunktionen.

Es ist ersichtlich, dass beispielsweise durch ein Leuchtmittel mit mehreren Lichtleitern welche beispielsweise allesamt mit einem doppelseitig reflektierenden Element zwischen den beiden Enden innerhalb jeden Lichtleiters sowie mit doppelseitiger Lichteinkopplung besonders bevorzugt mit mehreren Lichtfarben an jedem Ende versehen sind, mit einer deutlich verringerten Anzahl an Lichtleitern sämtliche Lichtfunktionen einer Kraftfahrzeugleuchte derart verwirklicht werden können, dass jede momentan allein aufgerufene Lichtfunktion alle durch die Trennung vermittels jeweils eines doppelseitig reflektierenden Elements hergestellten Partien aller Lichtleiter nutzt, paarweise momentan aufgerufene Lichtfunktionen beispielsweise alle ersten Partien aller Lichtleiter für eine erste Lichtfunktion und alle zweiten Partien aller Lichtleiter für eine zweite Lichtfunktion nutzen, sowie bei einer höheren Anzahl momentan aufgerufener Lichtfunktionen diese abhängig vom Leuchtflächenbedarf für eine optimale Sichtbarkeit der jeweiligen Lichtfunktionen sich die ersten und zweiten Partien und die Lichtleiter entsprechend teilen.

Die Auskopplung des in den Lichtleiter eingekoppelten Lichts erfolgt vorzugsweise nach Umlenkung des eingekoppelten Lichts durch Totalreflexion an zumindest einer Lichtumlenkfläche des Lichtleiters. Bevorzugt ist die Lichtumlenkfläche gegenüber der Lichtauskoppelfläche angeordnet.

Auch ist denkbar, dass die Auskopplung direkt an der Lichtauskoppelfläche erfolgt, ohne der Lichtauskoppelfläche im Lichtleiter gegenüberliegende Lichtumlenkfläche.

Der Lichtleiter kann an einen Strakverlauf einer Kraftfahrzeugleuchte angepasst sein.

Der Lichtleiter kann mit zumindest einer Lichtquelle verbunden sein. Vorzugsweise ist der Lichtleiter an die Lichtquellen angespritzt. Der Lichtleiter kann aber auch als ein separates Bauteil des Leuchtmittels ausgeführt sein.

Beispielsweise kann der Lichtleiter als Primäroptik der beispielsweise angespritzten Lichtquellen dienen bzw. als eine solche Primäroptik ausgebildet sein.

Als Lichtquellen des Leuchtmittels kommen vorzugsweise insgesamt zwei oder mehrere Licht gleicher oder unterschiedlicher Farbe abstrahlende LEDs zum Einsatz. LEDs können zumindest annäherungsweise als Punktlichtquelle angesehen werden. Dies führt dazu, dass das Licht eines ausgelegten Lichtleiters weniger gestreut wird, als bei einer Lichtquelle in Form einer Glühlampe mit einer räumlich ausgedehnten Glühwendel. Hierdurch kann das Lichtleiterdesign exakter ausgeführt werden, wodurch darüber hinaus eine höhere Effizienz des optischen Systems erhalten wird.

LEDs weisen außerdem bei gleicher Lichtstärke einen im Vergleich zu anderen Lichtquellen geringeren Stromverbrauch auf. Hierdurch kann bei einer Verwendung des Lichtleiters beispielsweise in einer Kraftfahrzeugleuchte die Belastung eines zur Stromversorgung vorgesehenen Bordnetzes eines Kraftfahrzeugs verringert werden, einhergehend mit Einsparungen beim Energieverbrauch des Kraftfahrzeugs. Ferner weisen LEDs eine weit höhere Lebensdauer auf, als andere, zur Anwendung in einer Kraftfahrzeugleuchte in Frage kommende Lichtquellen. Durch die längere Lebensdauer wird unter Anderem durch die geringere Ausfallquote die Betriebssicherheit und damit einhergehend die Qualität der Kraftfahrzeugleuchte erhöht.

Zum Betrieb von LEDs als Lichtquellen für ein Leuchtmittel beispielsweise einer Kraftfahrzeugleuchte können eine oder mehrere mehr oder minder komplexe elektronische Steuerschaltungen vorgesehen sein, die beispielsweise auf einem oder mehreren Leuchtmittelträgern des Leuchtmittels angeordnet und in dem Leuchteninnenraum beherbergt sein können.

Ein einfaches Beispiel für eine elektronische Steuerschaltung betrifft die Angleichung unterschiedlicher Helligkeiten einzelner LEDs oder von LED-Strängen innerhalb einer Gruppe gemeinsam betriebener, auf einem oder mehreren Leuchtmittelträgern angeordneter LEDs. Eine solche elektronische Steuerschaltung besteht aus mindestens einem oder mehreren Vorwiderständen zur Anpassung der Vorwärtsspannung der LEDs an das Bordnetz. Beispielsweise ist bekannt, die LEDs im so genannten Binning nach Vorwärtsspannung und Intensität zu sortieren. Um Unterschiede zwischen mehreren LED-Strängen auszugleichen, die jeweils aus in Reihe geschalteten LEDs gleicher Vorwärtsspannung und Intensität bestehen, und um eine homogene Helligkeitsverteilung der benachbarten LED-Stränge aus LEDs mit unterschiedlicher Vorwärtsspannung und Intensität zu erhalten, wird zumindest jeder LED-Strang mit einem anderen Vorwiderstand versehen.

LEDs bedürfen darüber hinaus beim Einsatz als Lichtquelle insbesondere in Kraftfahrzeugleuchten oft einer separaten Ausfallerkennung. Dies ist bedingt durch die geringe Leistungsaufnahme von LEDs im Allgemeinen. Beispielsweise ist ein in einem Kraftfahrzeug untergebrachtes Steuergerät nicht in der Lage, eine dem Ausfall einer oder weniger LEDs entsprechende Änderung der Leistungsentnahme aus dem Bordnetz zu erkennen, da eine hieraus resultierende Bordnetzspannungsänderung unterhalb der im normalen Betrieb eines Kraftfahrzeugs auftretenden Bordnetzspannungsschwankungen liegt. Eine beispielsweise in der Kraftfahrzeugleuchte untergebrachte elektronische Schaltungsanordnung zur Ausfallerkennung erfasst den Ausfall einer oder mehrerer Leuchtdioden in der Kraftfahrzeugleuchte z.B. mittels eines oder mehrerer Komparatoren und teilt dies dem Steuergerät mit. Diese elektronische Schaltungsanordnung zur Ausfallerkennung kann durch eine beispielsweise auf dem Leuchtmittelträger aufgebrachte elektronische Steuerschaltung verwirklicht sein.

Darüber hinaus können LEDs weiterer elektronischer Steuerschaltungen bedürfen. Beispiele hierfür sind elektronische Steuerschaltungen:
- zur Regelung und/oder Steuerung der Helligkeit bzw. Leuchtkraft der LEDs, beispielsweise durch eine pulsweitenmodulierte Taktung der Stromversorgung für einen außerhalb des für das menschliche Auge wahrnehmbaren Bereichs gepulsten Betrieb,
- zur Kompensation oder Vermeidung elektromagnetischer Störungen, beispielsweise aufgebaut aus Kondensatoren und/oder Ferriten,
- zum Schutz der LEDs z.B. vor einer Überspannung des Bordnetzes oder vor fehlerhafter Polung, beispielsweise umfassend eine oder mehrere Zenerdioden,

Zusammengefasst muss für fast alle LED-Anwendungen eine mehr oder minder umfangreiche, für die speziellen LEDs ausgelegte elektronische Steuerschaltung z.B. auf den mindestens einen Leuchtmittelträger aufgebracht werden. Die elektronische Steuerschaltung umfasst im einfachsten Fall einen Vorwiderstand und eine Schutzdiode, kann aber je nach Anwendung auch wesentlich mehr Elektronikbauteile enthalten, wie z.B. Mikrokontroller bzw. Kontroller, Komparatoren, Transistoren, Schutzdioden, elektrische Widerstände z.B. als Vorwiderstand, Kondensatoren, Ferrite, etc.

Somit kann ein beispielsweise für eine Kraftfahrzeugleuchte vorgesehenes Leuchtmittel mit mehreren LEDs als Lichtquellen zur beidseitigen Lichteinkopplung in wenigstens einen Lichtleiter des Leuchtmittels neben einem Lichtleiter zumindest ein oben genanntes Elektronikbauteil sowie mindestens zwei LEDs umfassen. Demnach kann ein Leuchtmittel mit einem Lichtleiter und zwei oder mehreren LEDs als zur beidseitigen Lichteinkopplung in den Lichtleiter vorgesehenen Lichtquellen neben den LEDs zumindest noch über ein weiteres Elektronikbauelement verfügen.

Zur Verwirklichung des doppelseitige reflektierenden Elements innerhalb des Lichtleiters geeignete technische Ausführungen bzw. Produktionsmöglichkeiten sind beispielsweise:
- in-mold decoration von doppelseitig reflektierender Folie bei einem Lichtleiter in Spritzgusstechnologie;
- Einbringen eines spiegelnden Glaselements beim Spritzgießen;
- zwei jeweils eine Partie des Lichtleiters bildende Lichtleiterelemente, die so gestaltet sind, dass sie beispielsweise mittig zusammengeklippst werden können und dazwischen ein reflektierendes Element enthalten ist;
- zwei jeweils eine Partie des Lichtleiters bildende Lichtleiterelemente, die am jeweiligen, der Lichteinkoppelfläche gegenüberliegenden Ende bedampft sind und so ausgestaltet sind, dass sie zusammen montiert werden können;
- zwei zeitlich hintereinander folgende Spritzgussschritte mit zwischenzeitlichem Einlegen eines reflektierenden Elements;
- Ausbildung einer totalreflektierenden Struktur im Lichtleiter als doppelseitig reflektierendes Element, beispielsweise in Form einer Ausnehmung, Leerstelle oder Füllstelle mit einem optisch dichteren oder dünneren Material.

Eine Kraftfahrzeugleuchte, für die ein oder mehrere zuvor erwähnte Leuchtmittel mit jeweils mindestens einem Lichtleiter vorgesehen sein können, weist einen von einem Leuchtengehäuse und einer Lichtscheibe umschlossenen Leuchteninnenraum auf. Der Leuchteninnenraum beherbergt mindestens ein Leuchtmittel mit mindestens einem Lichtleiter und mindestens zwei Lichtquellen zur beidseitigen Lichteinkopplung in den Lichtleiter. Der mindestens eine Lichtleiter ist dabei vorzugsweise ebenfalls in dem Leuchteninnenraum untergebracht.

Der Leuchteninnenraum kann darüber hinaus mindestens einen beim Blick von außerhalb der Kraftfahrzeugleuchte durch die Lichtscheibe hindurch hinter dem Lichtauskoppelbereich des Lichtleiters angeordneten Reflektor aufweisen, welcher zumindest auf dessen der Lichtscheibe zugewandte Vorderseite gestrahltes Licht gemäß einer beispielsweise gesetzliche Vorgaben an die Lichtverteilung in eine oder mehrere Vorzugrichtungen und Leuchtdichte in dieser einen oder mehreren Vorzugsrichtungen erfüllenden, vorgegebenen Abstrahlcharakteristik reflektiert.

Der Leuchteninnenraum der Kraftfahrzeugleuchte kann in eine oder mehrere, einer gemeinsamen und/oder verschiedenen Lichtfunktionen zugeordnete Leuchtenkammern unterteilt sein, von denen mindestens eine Leuchtenkammer wie zuvor beschrieben mit einem Lichtleiter ausgestattet ist.

Die Kraftfahrzeugleuchte kann beispielsweise als Heckleuchte für ein Kraftfahrzeug ausgebildet sein.

Es ist ersichtlich, dass die Erfindung in jedem Fall verwirklicht sein kann durch einen Lichtleiter mit beidseitiger Lichteinkopplung vorzugsweise mit unterschiedlicher Wellenlänge, sowie einem im Lichtleiter angeordneten, doppelseitig reflektierenden Element zur Trennung zwischen den beiden Bereichen unterschiedlicher Wellenlänge.

Vorteile gegenüber dem Stand der Technik ergeben sich unter anderem durch eine Trennung zwischen den durch das doppelseitig reflektierende Element geschaffenen beiden Bereichen bzw. Partien des Lichtleiters. Bei einer doppelseitigen Lichteinkopplung an beiden Enden des Lichtleiters mit unterschiedlicher Intensität und/oder Wellenlänge vermischt sich bislang der Helligkeits- und/oder Farbeindruck, wodurch eine Trennung zwischen den beiden Bereichen optisch nicht möglich ist. Durch das doppelseitig reflektierende Element wird eine solche Trennung geschaffen, wodurch ein Lichtleiter für zwei verschiedene Lichtfunktionen gegebenenfalls unterschiedlicher Lichtfarben zeitgleich sowie auch zeitversetzt verwendet werden kann, ohne dass es zu einer Durchmischung der Lichtfunktionen und Lichtfarben kommt.

Dadurch kann die Nutzung eines Lichtleiters im Vergleich zum Stand der Technik vervielfacht werden, da dieser nunmehr durch Aufrufen der durch ihn verwirklichten zwei oder mehr Lichtfunktionen häufiger genutzt wird, als wenn dieser nur zur Verwirklichung einer Lichtfunktion vorgesehen ist.

Dadurch werden die eingangs erwähnten entgegenstehenden Forderungen durch den viel höheren Ausnutzungsgrad des Lichtleiters entschärft.

Hierdurch kann der generellen Forderungen beispielsweise an Kraftfahrzeugteile und Kraftfahrzeugkomponenten bezüglich Kostensenkung bei Herstellung und Montage unter Einbeziehung von Lichtleitern bei der Verwirklichung von Lichtfunktionen gerecht geworden werden.

Zusätzliche Vorteile gegenüber dem Stand der Technik ergeben sich dadurch, dass durch einen Bedarf von höchstens der Hälfte der Anzahl der bisher beim Stand der Technik benötigten Lichtleiter zur Erfüllung ebenso vieler Lichtfunktionen ein geringerer Bauraumbedarf bei gleichzeitig hohem Qualitätseindruck verwirklicht werden kann. Hierdurch können vermittels des Leuchtmittels beispielsweise Kraftfahrzeugleuchten hergestellt werden, welche besser an jede erdenkliche Einbausituation angepasst werden können und dabei besonders hohen Qualitätsanforderungen gerecht werden.

Der hohe Qualitätseindruck kann unter anderem dadurch erreicht werden, weil eine höhere Homogenität der Lichtverteilung innerhalb des Lichtleiters erhalten wird, indem reflektiertes Licht entsprechend wieder verwendet wird.

Weitere Vorteile gegenüber dem Stand der Technik ergeben sich durch die Mehrfachverwendung der Lichtleiter für mehrere Lichtfunktionen unterschiedlicher und/oder gleicher Helligkeit und/oder Lichtfarbe. Hierdurch wird deren Anzahl verringert, wodurch das Leuchtmittel und damit einhergehend eine mit einem solchen ausgestattete, beispielsweise als Kraftfahrzeugleuchte ausgeführte Leuchte kostengünstig hergestellt werden kann.

Zusätzliche Vorteile ergeben sich dadurch, dass im auch als Warmzustand bezeichneten eingeschalteten Zustand des Leuchtmittels ein direkter Blick auf die zur Erfüllung mindestens einer Lichtfunktion der Kraftfahrzeugleuchte vorgesehene Lichtquelle des Leuchtmittels verhindert ist.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: einen Längsschnitt eines Leuchtmittels in einer Draufsicht mit einem durch ein doppelseitig reflektierendes Element in zwei lichttechnisch voneinander unabhängige Partien unterteilten Lichtleiter mit beidseitiger Lichteinkopplung gemäß einem ersten Ausführungsbeispiel.
- Fig. 2: einen Längsschnitt eines Leuchtmittels in einer Vorderansicht mit einem durch ein doppelseitig reflektierendes Element in zwei lichttechnisch voneinander unabhängige Partien unterteilten Lichtleiter mit beidseitiger Lichteinkopplung gemäß einem zweiten Ausführungsbeispiel.
- Fig. 3: einen Längsschnitt eines Leuchtmittels in einer Draufsicht mit einem durch ein doppelseitig reflektierendes Element in zwei lichttechnisch voneinander unabhängige Partien unterteilten Lichtleiter mit beidseitiger Lichteinkopplung gemäß einem dritten Ausführungsbeispiel.

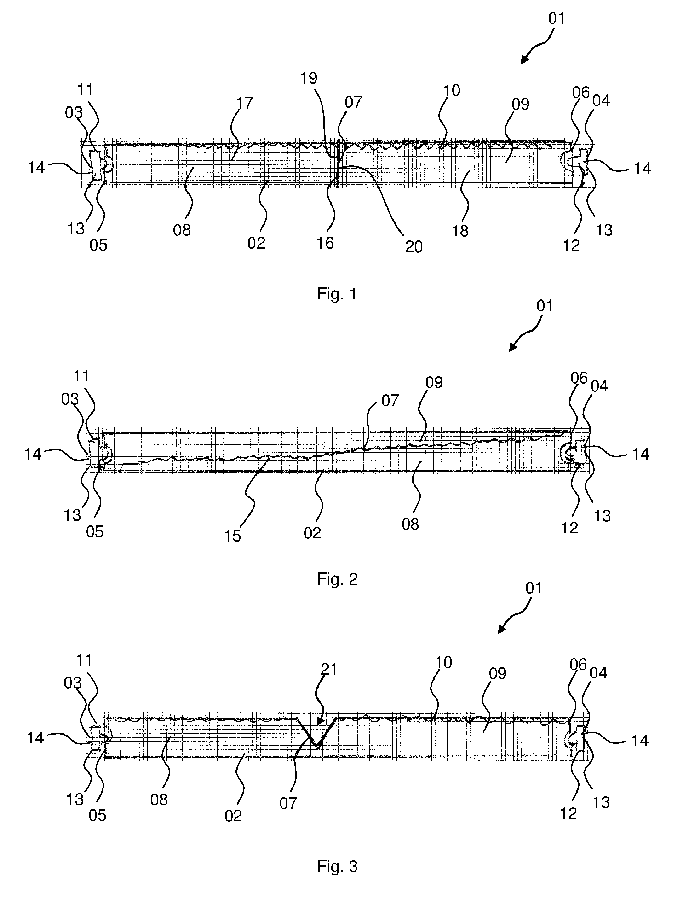

Ein in den Fig. 1 bis Fig. 3 ganz oder in Teilen dargestelltes Leuchtmittel 01 umfasst mindestens einen Lichtleiter 02 und jeweils wenigstens eine an jedem der gegenüberliegenden Enden 05, 06 des Lichtleiters 02 angeordnete Lichtquelle 03, 04. Die Lichtquellen 03, 04 dienen der beidseitigen Lichteinkopplung in den Lichtleiter 02, entsprechend mindestens zwei Lichtquellen 03, 04 an zwei gegenüberliegenden Enden 05, 06, von denen je mindestens eine Lichtquelle 03, 04 an jeweils einem Ende 05, 06 des Lichtleiters 02 vorgesehen und dem jeweiligen Ende 05, 06 zugeordnet ist.

Zwischen den beiden Enden 05, 06 ist vorzugsweise innerhalb des Lichtleiters 02 ein doppelseitig reflektierendes Element 07 angeordnet. Das doppelseitig reflektierende Element 07 unterteilt den Lichtleiter 02 in zwei lichttechnisch voneinander unabhängige Partien 08, 09. Die beiden Partien 08, 09 sind frei von einer Überkopplung von von einer Lichtquelle 03, 04 in die eine Partie 08, 09 eingekoppelten Lichts in die andere Partie 09, 08.

Die Partien 08, 09 können wie nachfolgend noch ausgeführt in Abhängigkeit von der Lichteinkopplung an den beiden Enden 05, 06 des Lichtleiters 02 beide dieselbe Lichtfunktion, oder unterschiedliche Lichtfunktionen erfüllen. Die beiden Partien 08, 09 sind dabei optisch voneinander getrennt, wobei am einen Ende eingekoppeltes Licht nicht über das doppelseitig reflektierende Element 07 hinweg propagieren kann.

An der Rückseite des Lichtleiters 02 ist eine Lichtumlenkfläche 10 angeordnet, welche von den beiden Enden 05, 06 in den Lichtleiter eingekoppeltes Licht zur gegenüberliegenden Vorderseite umlenkt, wo es dann ausgekoppelt wird.

Es können Lichtquellen 03, 04 gleicher Lichtfarbe und/oder Lichtquellen 11, 12 unterschiedlicher Lichtfarbe zur Lichteinkopplung an den beiden Enden 05, 06 des Lichtleiters 02 vorgesehen sein.

Beispielsweise kann der Lichtleiter 02 durch die Verwendung von Lichtquellen 03, 04, 11, 12 unterschiedlicher Lichtfarben zeitgleich und zeitversetzt für Lichtfunktionen verschiedener Lichtfarben vorgesehen sein, ohne die Lichtfarben zu durchmischen.

Das doppelseitig reflektierende Element 07 innerhalb des Lichtleiters 02 trennt bei einer doppelseitigen Einspeisung an beiden Enden 05, 06 des Lichtleiters 02 mit gleicher oder unterschiedlicher Wellenlänge die beiden für die durch die unterschiedlichen Helligkeiten oder Wellenlängen gegebenen, gleichen oder verschiedenen Lichtfarben vorgesehenen Partien 08, 09 des Lichtleiters 02.

Bei der Verwendung verschiedenfarbiger Lichtquellen 03, 12 bzw. 04, 11 zur Lichteinkopplung an den beiden gegenüberliegenden Enden 05, 06 können vermittels ein und desselben Lichtleiters 02 mehrere Lichtfunktionen gleichzeitig und auch zeitversetzt unter Nutzung des gesamten Lichtleiters 02 verwirklicht werden.

Eine noch bessere Ausnutzung des Lichtleiters 02 ergibt sich dadurch, dass an mindestens einem Ende 05, 06 des Lichtleiters 02 wenigstens zwei getrennt ansteuerbare Lichtquellen 03, 11, 04, 12 unterschiedlicher Lichtfarbe vorgesehen sind. Hierdurch kann in den Lichtleiter 02 zumindest von einem Ende 05, 06 her Licht wahlweise einer ersten Lichtfarbe oder einer zweiten Lichtfarbe sowie, falls eine entsprechende durch Mischung der beiden Lichtfarben erzeugte dritte Lichtfarbe verwendet werden soll, durch Betätigung beider Lichtquellen 03, 11 bzw. 04, 12 der ersten und der zweiten Lichtfarbe, eine dritte Lichtfarbe eingekoppelt werden.

Wenigstens zwei der getrennt ansteuerbaren Lichtquellen 03, 11 bzw. 04, 12 unterschiedlicher Lichtfarbe können durch eine Lichtquelle 13 verwirklicht sein, welche in der Lage ist, durch entsprechende Ansteuerung Licht unterschiedlicher Wellenlänge abzustrahlen. Bekannte derartige Lichtquellen sind Leuchtdioden mit beispielsweise zwei getrennt ansteuerbaren LED-Chips, einem beispielsweise für gelbes Licht, der andere für rotes Licht.

Der Lichtleiter 02 kann direkt mit mindestens einer Lichtquelle 03, 04, 11, 12, 13 verbunden, vorzugsweise angespritzt sein. Der Lichtleiter 02 kann dabei als Primäroptik der beispielsweise angespritzten Lichtquellen 03, 04, 11, 12, 13 dienen bzw. als eine solche Primäroptik ausgebildet sein.

Alternativ ist denkbar, den Lichtleiter 02 als ein separates Bauteil des Leuchtmittels 01 vorzusehen.

Beispielsweise kann vermittels des Lichtleiters 02 das in diesen von den Lichtquellen 03, 04, 11, 12, 13 eingekoppelte Licht direkt in einer gewünschten Lichtverteilung ausgekoppelt werden, oder die Auskopplung erfolgt in einen Reflektor, welche ebenfalls Teil des Leuchtmittels 01 sein kann, welcher Reflektor die gewünschte Lichtverteilung besorgt.

Bei den Lichtquellen 03, 04, 11, 12, 13 handelt es sich vorzugsweise um LEDs 14.

Das vorzugsweise innerhalb des Lichtleiters 02 angeordnete, doppelseitige reflektierende Element 07 kann bei einem Lichtleiter 02 in Spritzgusstechnologie wie in Fig. 2 angedeutet vermittels in-mold decoration von doppelseitig reflektierender Folie 15 verwirklicht sein.

Grundsätzlich denkbar sind auch zwei zeitlich hintereinander folgende Spritzgussschritte mit zwischenzeitlichem Einlegen eines doppelseitig reflektierenden Elements 07 beispielsweise in Form einer doppelseitig reflektierende Folie 15 (Fig. 2) oder eines spiegelnden Glaselements 16 (Fig. 1).

Auch ist denkbar, das doppelseitig reflektierende Element 07 wie in Fig. 1 angedeutet durch Einbringen eines spiegelnden Glaselements 16 beim Spritzgießen oder durch zwei jeweils eine Partie 08, 09 des Lichtleiters 02 bildende Lichtleiterelemente 17, 18, welche beidseits eines doppelseitig reflektierenden Elements 07 miteinander verbindbar sind, zu verwirklichen. Als doppelseitig reflektierendes Element 07 kommt hierbei auch ein Bedampfen mit einer reflektierenden Schicht der beiden dem jeweils anderen Lichtleiterelement 17, 18 zugewandten und ihrer Lichteinkoppelfläche gegenüberliegenden Ende 19, 20 in Frage, wodurch vor dem Verbinden oder vor der gemeinsamen Montage der beiden Lichtleiterelemente 17, 18 eine Verspiegelung an diesen Enden 19, 20 hergestellt sein kann.

Eine weitere Ausgestaltungsmöglichkeit für das doppelseitig reflektierende Element 07 ist in Fig. 3 dargestellt. Hier ist eine totalreflektierende Struktur 21 im Lichtleiter als doppelseitig reflektierendes Element 07 ausgebildet. Diese kann beispielsweise in Form einer Ausnehmung, Leerstelle oder Füllstelle mit einem optisch dichteren oder dünneren Material ausgebildet sein.

Eine Kraftfahrzeugleuchte, welche einen von einem Leuchtengehäuse und einer Lichtscheibe umschlossenen Leuchteninnenraum aufweist, welcher mindestens ein zuvor beschriebenes Leuchtmittel 01 mit mindestens zwei Lichtquellen 03, 04, 11, 12, 13 und wenigstens einem Lichtleiter 02 mit beidseitiger Lichteinkopplung an zwei gegenüberliegenden Enden 05, 06 beherbergt, kann mittels der zur Lichteinkopplung an verschiedenen Enden 05, 06 des Lichtleiters 02 vorgesehenen Lichtquellen 03, 04, 11, 12, 13 des einen Leuchtmittels 01 mindestens zwei unterschiedliche Lichtfunktionen a), b), c), d) zeitgleich und auch zeitversetzt erfüllen.

Beispielsweise können vermittels des einen Leuchtmittels 01 die folgenden Lichtfunktionen zeitgleich und/oder zeitversetzt vermittels vorzugsweise nur eines Lichtleiters 02 verwirklicht werden:
a) Rücklichtfunktion (rot, normal hell, im Nachfolgenden zur einfachen Unterscheidung als dunkel, rot bezeichnet),
b) Bremslichtfunktion (rot, hell),
c) Wiederholblinklichtfunktion (gelb),
d) Rückfahrlichtfunktion (weiß).

Dabei kann zur Erfüllung nur einer Lichtfunktion, beispielsweise nur der:
- Rücklichtfunktion a) eine dunkle, rote Lichteinkopplung an beiden Enden des Lichtleiters,
- Bremslichtfunktion b) eine helle, rote Lichteinkopplung an beiden Enden des Lichtleiters,
- der Wiederholblinklichtfunktion c) eine im Wiederholblinklichttakt zeitweilig gelbe Lichteinkopplung an beiden Enden des Lichtleiters, sowie
- Rückfahrlichtfunktion d) eine weiße Lichteinkopplung an beiden Enden des Lichtleiters
erfolgen. Diese Regel kann auch für die Erfüllung zweier oder mehrerer zeitversetzt aufgerufener Lichtfunktionen angewandt werden.

Außerdem kann zur zeitgleichen Erfüllung zweier Lichtfunktionen, beispielsweise der:
- Rücklichtfunktion a) und Bremslichtfunktion b) eine dunkle, rote Lichteinkopplung an einem Ende des Lichtleiters und helle, rote Lichteinkopplung am verbleibenden, gegenüberliegenden Ende des Lichtleiters,
- Rücklichtfunktion a) und Wiederholblinklichtfunktion c) eine dunkle, rote Lichteinkopplung an einem Ende des Lichtleiters und zeitweilig gelbe Lichteinkopplung sowie bevorzugt zwischen der zeitweilig gelben Lichteinkopplung dunkle, rote Lichteinkopplung am verbleibenden, gegenüberliegenden Ende des Lichtleiters,
- Bremslichtfunktion b) und Wiederholblinklichtfunktion c) eine helle, rote Lichteinkopplung an einem Ende des Lichtleiters und zeitweilig gelbe Lichteinkopplung sowie bevorzugt zwischen der zeitweilig gelben Lichteinkopplung helle, rote Lichteinkopplung am verbleibenden Ende des Lichtleiters,
- Rücklichtfunktion a) und Rückfahrlichtfunktion d) eine dunkle, rote Lichteinkopplung an einem Ende des Lichtleiters und weiße Lichteinkopplung am verbleibenden, gegenüberliegenden Ende des Lichtleiters,
- Bremslichtfunktion b) und Rückfahrlichtfunktion d) eine helle, rote Lichteinkopplung an einem Ende des Lichtleiters und weiße Lichteinkopplung am verbleibenden, gegenüberliegenden Ende des Lichtleiters,
- Rückfahrlichtfunktion d) und Wiederholblinklichtfunktion c) eine weiße Lichteinkopplung an einem Ende des Lichtleiters und zeitweilig gelbe Lichteinkopplung sowie bevorzugt zwischen der zeitweilig gelben Lichteinkopplung
   weiße Lichteinkopplung am verbleibenden, gegenüberliegenden Ende des Lichtleiters erfolgen.

Darüber hinaus kann zur zeitgleichen Erfüllung dreier Lichtfunktionen, beispielsweise der:
- Bremslichtfunktion b) und Wiederholblinklichtfunktion c) und Rücklichtfunktion a) eine helle, rote Lichteinkopplung an einem Ende 05, 06 des Lichtleiters 02 und zeitweilig gelbe Lichteinkopplung sowie zwischen der zeitweilig gelben Lichteinkopplung dunkle, rote Lichteinkopplung am verbleibenden Ende 06, 05 des Lichtleiters 02 erfolgen.

Wichtig ist hervorzuheben, dass die Aufzählung nicht als abschließend zu verstehen ist. So kann beispielsweise grundsätzlich auch eine Nebelschlussleuchtfunktion verwirklicht werden, in Kombination mit den zuvor genannten Lichtfunktionen.

Es ist ferner ersichtlich, dass durch die Verwendung mehrerer beschriebener Leuchtmittel eine beliebige Skalierung der Lichtfunktionen möglich ist. Ferner ist durch Kombination mehrerer Leuchtmittel oder durch die Verwendung mehrerer wie beschriebener Lichtleiter die Erfüllung einer beliebigen Anzahl von Lichtfunktionen zeitgleich und zeitversetzt möglich. Bei einer entsprechenden Auswahl von Lichtquellen hinsichtlich deren Lichtfarben kann jeder Lichtfunktion, wird sie allein aufgerufen, die Gesamtfläche aller Lichtleiter als Lichtabstrahlfläche zur Verfügung gestellt werden. Sobald eine weitere Lichtfunktion zeitgleich zu einer solchen ersten Lichtfunktion aufgerufen wird, können sich die beiden Lichtfunktionen die Lichtleiter und damit die gesamt zur Verfügung stehende Lichtabstrahlfläche teilen. Dadurch steht jeder Lichtfunktion eine maximal mögliche Lichtabstrahlfläche zur Verfügung, was deren Erkennbarkeit verbessert und somit aufgrund der damit einhergehenden besseren und frühzeitigen Sichtbarkeit die Verkehrssicherheit eines mit einer solchen Kraftfahrzeugleuchte ausgestatteten Fahrzeugs nachhaltig erhöht.

Ebenfalls wichtig ist hervorzuheben, dass die beiden für die durch die unterschiedlichen Helligkeiten oder Wellenlängen gegebenen, gleichen oder verschiedenen Lichtfarben vorgesehenen Partien 08, 09 des Lichtleiters 02 ein beliebiges Größenverhältnis ihrer Lichtaustrittsflächen bzw. ihrer Anteile an der Lichtaustrittsfläche des Lichtauskoppelbereichs aufweisen können. Dieses Verhältnis kann 1:1 betragen, kann aber auch hiervon abweichen. So können die beiden Partien 08, 09 unterschiedliche Flächenverhältnisse an der Lichtauskoppelfläche des Lichtauskoppelbereichs des Lichtleiters 02 aufweisen. Insbesondere bei einer Mehrfachverwendung einer Partie 09 für beispielsweise zwei Lichtfunktionen, etwa durch eine unterschiedlich starke Bestromung der zugeordneten Lichtquelle veränderbare Helligkeit ist es beispielsweise bei der Verwendung einer Partie 08 für eine Rücklichtfunktion und einer angrenzenden Partie 09 für eine Rücklichtfunktion und sobald eine Bremslichtfunktion benötigt wird für diese, sinnvoll, der doppelt genutzten Partie 09 einen größeren Anteil an der Lichtaustrittsfläche zur Verfügung zu stellen.

Die Kraftfahrzeugleuchte kann beispielsweise als Heckleuchte ausgebildet sein.

Die Erfindung ist insbesondere im Bereich der Herstellung von Leuchtmitteln für Beleuchtungszwecke sowie für Kraftfahrzeugleuchten gewerblich anwendbar.

### Bezugszeichenliste

- 01: Leuchtmittel
- 02: Lichtleiter
- 03: Lichtquelle
- 04: Lichtquelle
- 05: Ende
- 06: Ende
- 07: doppelseitig reflektierendes Element
- 08: Partie
- 09: Partie
- 10: Lichtumlenkfläche
- 11: Lichtquelle
- 12: Lichtquelle
- 13: Lichtquelle
- 14: LED
- 15: doppelseitig reflektierende Folie
- 16: spiegelndes Glaselement
- 17: Lichtleiterelement
- 18: Lichtleiterelement
- 19: Ende
- 20: Ende
- 21: totalreflektierende Struktur

## Patentansprüche

1. Leuchtmittel (01) mit mindestens einem Lichtleiter (02) und jeweils wenigstens einer an jedem der gegenüberliegenden Enden (05, 06) des Lichtleiters (02) angeordneten Lichtquelle (03, 04, 1, 12, 13),
**gekennzeichnet durch**
ein doppelseitig reflektierendes Element (07) zwischen den beiden Enden (05, 06) des Lichtleiters (02), welches den Lichtleiter (02) in zwei lichttechnisch voneinander unabhängige Partien (08, 09) unterteilt, welche beiden Partien (08, 09) frei von einer Überkopplung von von einer Lichtquelle (03, 04, 11, 12, 13) in die eine Partie (08, 09) eingekoppelten Lichts in die andere Partie (09, 08) sind.

2. Kraftfahrzeugleuchte mit einem von einem Leuchtengehäuse und einer Lichtscheibe umschlossenen Leuchteninnenraum, welcher mindestens ein Leuchtmittel (01) mit mindestens zwei Lichtquellen (03, 04, 11, 12, 13) zur Erfüllung mindestens zweier unterschiedlicher Lichtfunktionen (a), b), c), d)) der Kraftfahrzeugleuchte sowie mindestens einen Lichtleiter (02) mit beidseitiger Lichteinkopplung an zwei gegenüberliegenden Enden (05, 06) beherbergt,
**gekennzeichnet durch**
ein Leuchtmittel (01) nach Anspruch 1, wobei die zur Lichteinkopplung an verschiedenen Enden (05, 06) des Lichtleiters (02) vorgesehenen Lichtquellen (03, 04, 11, 12, 13) zur Erfüllung zumindest zweier unterschiedlicher Lichtfunktionen der Kraftfahrzeugleuchte vorgesehen sind.

3. Leuchtmittel oder Kraftfahrzeugleuchte nach Anspruch 1 oder 2,
**gekennzeichnet durch**
Lichtquellen (03, 04, 11, 12, 13) gleicher und/oder unterschiedlicher Lichtfarbe an den beiden Enden (05, 06) des Lichtleiters (02).

4. Leuchtmittel oder Kraftfahrzeugleuchte nach Anspruch 1, 2 oder 3,
**gekennzeichnet durch**
wenigstens zwei Lichtquellen (03, 11, 04, 12, 13) unterschiedlicher Lichtfarbe an mindestens einem Ende (05, 06) des Lichtleiters (02).

5. Leuchtmittel oder Kraftfahrzeugleuchte nach Anspruch 4,
**dadurch gekennzeichnet**
**dass** wenigstens zwei Lichtquellen (03, 11, 04, 12) unterschiedlicher Lichtfarbe durch eine Lichtquelle (13) verwirklicht sind, welche in der Lage ist, Licht unterschiedlicher Wellenlänge abzustrahlen.

6. Leuchtmittel oder Kraftfahrzeugleuchte nach einem der vorhergehenden Ansprüche,
**dadurch gekennzeichnet,**
**dass** der Lichtleiter (02) direkt mit mindestens einer Lichtquelle (03, 04, 11, 12, 13) verbunden, oder als ein separates Bauteil des Leuchtmittels (01) ausgeführt ist.

7. Leuchtmittel oder Kraftfahrzeugleuchte nach Anspruch 6,
**dadurch gekennzeichnet,**
**dass** der Lichtleiter (02) als Primäroptik der Lichtquellen (03, 04, 11, 12, 13) dient.

8. Leuchtmittel oder Kraftfahrzeugleuchte nach einem der vorhergehenden Ansprüche,
**gekennzeichnet durch**
Licht gleicher oder unterschiedlicher oder veränderlicher Farbe abstrahlende LEDs (14) als Lichtquellen (03, 04, 11, 12, 13).

9. Leuchtmittel oder Kraftfahrzeugleuchte nach einem der vorhergehenden Ansprüche,
**gekennzeichnet durch**
eine Verwirklichung des doppelseitige reflektierenden Elements (07) vermittels:
- in-mold decoration von doppelseitig reflektierender Folie (15) bei einem Lichtleiter (02) in Spritzgusstechnologie;
- Einbringen eines spiegelnden Glaselements (16) beim Spritzgießen;
- zwei jeweils eine Partie (08, 09) des Lichtleiters (02) bildende Lichtleiterelemente (17, 18), welche beidseits eines doppelseitig reflektierenden Elements (07) miteinander verbindbar sind;
- zwei jeweils eine Partie (08, 09) des Lichtleiters (02) bildende Lichtleiterelemente (17, 18), welche miteinander verbindbar und am jeweiligen, dem anderen Lichtleiterelement (18, 17) zugewandten Ende (19, 20) **durch** Bedampfen verspiegelt sind;
- zwei zeitlich hintereinander folgende Spritzgussschritte mit zwischenzeitlichem Einlegen eines doppelseitig reflektierenden Elements (07, 15, 16);
- Ausbildung einer totalreflektierenden Struktur (21) im Lichtleiter (02).

10. Leuchtmittel oder Kraftfahrzeugleuchte nach einem der vorhergehenden Ansprüche,
**gekennzeichnet durch**
ein beliebiges Größenverhältnis der beiden Partien (08, 09), bevorzugt ein Größenverhältnis zwischen 1:10 und 10 und besonders bevorzugt ein von 1:1 abweichendes Größenverhältnis.
